# EUROPEAN PATENT APPLICATION

(11) **EP 2 298 844 A1**
(43) Date of publication of application: **23.03.2011**
(21) Application number: 09754400.1
(22) Date of filing: 20.05.2009
(51) Int. Cl.: C09J 7/00, C09J 11/04, C09J 133/04

(54) **ACRYLIC PRESSURE-SENSITIVE ADHESIVE TAPE OR SHEET**

(30) Priority: 29.05.2008 JP 2008140388
(71) Applicant: Nitto Denko Corporation, Ibaraki-shi Osaka 567-8680 (JP)
(72) Inventor: NONAKA, Akiko, Ibaraki-shi Osaka 567-8680 (JP); INOKUCHI, Shinji, Ibaraki-shi Osaka 567-8680 (JP); HIROSE, Tetsuya, Ibaraki-shi Osaka 567-8680 (JP)
(74) Representative: Grünecker, Kinkeldey, Stockmair & Schwanhäusser Anwaltssozietät
(86) International application number: PCT/JP2009/002219
(87) International publication number: WO 2009/144891

(57) **Abstract**

Provided is an acrylic pressure-sensitive adhesive tape or sheet that shows high initial low-temperature adhesive strength, and is superior in suppression of the liner pop-off.

The acrylic pressure-sensitive adhesive tape or sheet according to the present invention is **characterized in that** it is an acrylic pressure-sensitive adhesive tape or sheet having a pressure-sensitive adhesive layer and a release liner, in which: the pressure-sensitive adhesive layer is a bubble-mixed inorganic filler-containing acrylic pressure-sensitive adhesive layer containing an acrylic polymer formed from an acrylic monomer mixture containing an alkyl (meth)acrylate ester (a) having an alkyl group having a carbon number of 1 to 14 and a polar group-containing vinyl monomer (b), an inorganic filler, and bubbles; and the release liner is a release liner having a low-density polyethylene layer as one surface layer, a mixed resin layer containing a low-density polyethylene and a high-density polyethylene as resin components as the other surface layer, and additionally a high-density polyethylene layer as an intermediate layer.

## Description

### [Technical Field]

The present invention relates to an acrylic pressure-sensitive adhesive tape or sheet, more specifically to an acrylic pressure-sensitive adhesive tape or sheet used for fixation of an automotive exterior part, in particular a weather strip, to an automotive coated plate.

### [Background Art]

Acrylic pressure-sensitive adhesive tapes or sheets (hereinafter, the "tapes or sheets" may be referred to simply as "tapes" or "sheets") have been used widely for fixation of an automotive exterior part to an automobile coated plate. The pressure-sensitive adhesive tape used in such an application may contain an added inorganic or organic filler for making the adhesive tape resistant to the dead weight and repulsion of the part by providing it with high cohesive power and high shearing strength, for improvement in processability, and for reduction in weight.

Examples of the inorganic fillers include silica, calcium carbonate, clay, titanium oxide, glass microsphere, alumina microsphere, and the like (see Patent Documents 1 and 2). Alternatively, examples of the organic fillers include polyester beads, vinylidene chloride microspheres, acryl microspheres, and the like (see Patent Document 3).

However, the addition amount of the inorganic filler used as the filler is relatively large in common compositions for exterior pressure-sensitive adhesive tape, leading to deterioration in adhesiveness due to exposure of non-adhesive particles on a sheet surface and to significant decrease in adhesiveness under low pressurization condition at low temperature. When a soft and hollow rubber part, such as door weather strip, is used, the pressure applied to the part is dispersed and relaxed by the part, prohibiting sufficient transmission of the force to an adhesion interface and occasionally leading to unfavorable fixation.

Such a pressure-sensitive adhesive tape, for example when it has a double-sided pressure-sensitive adhesive layer, is often cut or processed and stored for a certain period of time before use as its one side is bonded to an adherend and the other side to a release liner. In particular in the case of a long part or a soft part such as door weather strip, they may be stored as it is wound as a roll for reduction in space(space saving). When such a pressure-sensitive adhesive tape having a release liner is stored as it is bent in this way, the release liner may be partially separated from the pressure-sensitive adhesive layer, causing so-called " liner pop-off (liner partial lifting, liner partial separation)" and resulting in staining of the pressure-sensitive adhesive layer.

It is possible to use a release liner with high peel strength for suppression of the liner pop-off (prevention of the partial separation of the release liner) but, in such a case, the liner pop-off may is prevented, but the releasability declines. In other words, suppression of liner pop-off and releasability have an antinomic (trade off) relationship. Methods of using a polar group-containing material as the release layer for suppression of the liner pop-off are known (see, for example, Patent Document 4), but such method has a problem that recycling of the release liner is difficult. Since the release liner is disposed of after use, there is currently a need for a release liner superior in recycling property from the viewpoint of environment load.

### [Citation List]

### [Patent Literature]

Patent Document 1: Japanese Unexamined Patent Application No. 4-248820
Patent Document 2: Japanese Examined Patent Application Publication No. 2-50145
Patent Document 3: Japanese Examined Patent Application Publication No. 8-32435
Patent Document 4: Japanese Patent No. 3179516

### [Summary of Invention]

### [Technical Problem]

An object of the present invention is to provide an acrylic pressure-sensitive adhesive tape or sheet that shows high initial low-temperature adhesive strength, and is superior in suppression of the liner pop-off (resistance to release liner's partial separation) from the pressure-sensitive adhesive layer.

### [Solution to Problem]

After intensive studies to achieve the object, the inventors have found that it is possible to obtain high initial low-temperature adhesive strength by using, as the pressure-sensitive adhesive layer, a bubble-mixed inorganic filler-containing acrylic pressure-sensitive adhesive layer containing an acrylic polymer formed from an acrylic monomer mixture containing an alkyl (meth)acrylate (a) having an alkyl group having a carbon number of 1 to 14 and a polar group-containing vinyl monomer (b) at a component ratio [(a)/(b)] (by weight) of 95/5 to 91/9, an inorganic filler in the amount at a rate of 0.1 parts by weight or more and less than 2 parts by weight with respect to 100 parts by weight of the all monomer components forming the acrylic polymer, and bubbles, and that it is possible to satisfy the requirements in the peeling strength and the resistance to the suppression of the liner pop-off from the pressure-sensitive adhesive layer simultaneously by using a release liner having a particular resin composition and a particular laminate structure as the release liner simultaneously, and thus, the inventors made the present invention.

Specifically, the present invention provides an acrylic pressure-sensitive adhesive tape or sheet having a pressure-sensitive adhesive layer and a release liner, characterized in that: the pressure-sensitive adhesive layer is a bubble-mixed inorganic filler-containing acrylic pressure-sensitive adhesive layer containing an acrylic polymer formed from an acrylic monomer mixture containing an alkyl (meth)acrylate ester (a)having an alkyl group having a carbon number of 1 to 14 and a polar group-containing vinyl monomer (b) at a component ratio [(a)/(b)] (by weight) of 95/5 to 91/9, an inorganic filler in the amount at a rate of 0.1 parts by weight or more and less than 2 parts by weight with respect to 100 parts by weight of the all monomer components forming the acrylic polymer, and bubbles; and the release liner is a release liner having an at least 3-layered structure having a low-density polyethylene layer as one surface layer, a mixed resin layer containing a low-density polyethylene and a high-density polyethylene as resin components as the other surface layer, and additionally a high-density polyethylene layer as the intermediate layer.

The inorganic filler is preferably at least one inorganic filler selected from the group of hydrophobic silica and hollow glass microspheres.

Preferably, at least one polar group-containing vinyl monomer (b) is acrylic acid.

The mixed resin layer containing a low-density polyethylene and a high-density polyethylene as resin components in the release liner preferably contains the low-density polyethylene and the high-density polyethylene at a low-density polyethylene/high-density polyethylene weight ratio of 90/10 to 10/90. The thickness of the release liner is preferably 10 to 500 µm.

The acrylic pressure-sensitive adhesive tape or sheet is preferably used for fixation of an automotive exterior part to an automotive coated plate. The automotive exterior part is preferably a weather strip.

### [Advantageous Effect of Invention]

The acrylic pressure-sensitive adhesive tape or sheet according to the present invention in the configuration above shows high initial low-temperature adhesive strength, and is superior in suppression of the liner pop-off from the pressure-sensitive adhesive layer.

### [Brief Description of Drawings]

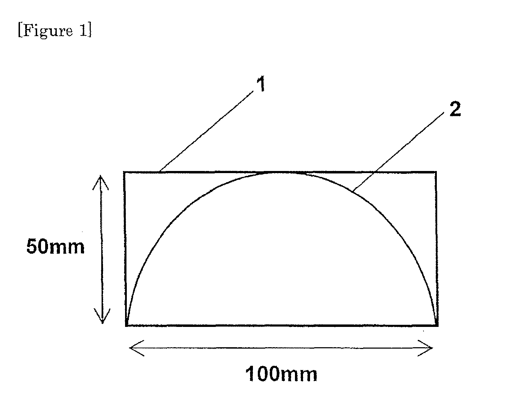

Figure 1 is a schematic top view illustrating the fixing method of fixing a test piece to a fixing rod in an evaluation method of "liner pop-off ".

### [Description of Embodiments]

The acrylic pressure-sensitive adhesive tape according to the present invention at least has a bubble-mixed inorganic filler-containing acrylic pressure-sensitive adhesive layer containing an acrylic polymer formed from an acrylic monomer mixture containing an alkyl (meth)acrylate (a) having a carbon number of 1 to 14 and a polar group-containing vinyl monomer (b) at a former (a)/latter (b) weight ratio of 95/5 to 91/9, an inorganic filler in the amount at a rate of 0.1 parts by weight or more and less than 2 parts by weight with respect to 100 parts by weight of all monomer components forming the acrylic polymer, and bubbles; and a release liner having a structure with at least 3 layers, having a low-density polyethylene layer as one surface, a mixed resin layer containing a low-density polyethylene and high-density polyethylene as resin components as the other surface layer, and additionally a high-density polyethylene layer as the intermediate layer. The release liner of the acrylic pressure-sensitive adhesive tape according to the present invention is normally removed before use.

The acrylic pressure-sensitive adhesive tape according to the present invention may be in a form of a double-sided pressure-sensitive adhesive tape having a pressure-sensitive adhesive face (tacky face) on both faces or in a form of a single-faced pressure-sensitive adhesive tape having a pressure-sensitive adhesive face (tacky face) only on one face.

When the acrylic pressure-sensitive adhesive tape according to the present invention is in the form of a double-sided pressure-sensitive adhesive tape, it may be, for example, an acrylic double-sided pressure-sensitive adhesive tape made of only a pressure-sensitive adhesive layer at least having a bubble-mixed inorganic filler-containing acrylic pressure-sensitive adhesive layer (referred to as "base-less (carrier-less) acrylic double-sided pressure-sensitive adhesive tape") or an acrylic double-sided pressure-sensitive adhesive tape having a bubble-mixed inorganic filler-containing acrylic pressure-sensitive adhesive layer formed at least on one face of a base (carrier) (referred to as "base-bound (base-supported) acrylic double-sided pressure-sensitive adhesive tape").

Examples of the base-less acrylic double-sided pressure-sensitive adhesive tapes include base-less acrylic double-sided pressure-sensitive adhesive tapes in a configuration having a pressure-sensitive adhesive layer made of only a bubble-mixed inorganic filler-containing acrylic pressure-sensitive adhesive layer, base-less acrylic double-sided pressure-sensitive adhesive tapes in the configuration having a pressure-sensitive adhesive layer made of a multilayer structure of a bubble-mixed inorganic filler-containing acrylic pressure-sensitive adhesive layer and a non-bubble-containing pressure-sensitive adhesive layer (referred to as "bubble-free pressure-sensitive adhesive layer"), and the like. Alternatively, examples of the base-bound acrylic double-sided pressure-sensitive adhesive tapes include base-bound acrylic double-sided pressure-sensitive adhesive tapes in a configuration having a bubble-mixed inorganic filler-containing acrylic pressure-sensitive adhesive layer formed on both faces of the base, base-bound acrylic double-sided pressure-sensitive adhesive tapes in a configuration having a bubble-mixed inorganic filler-containing acrylic pressure-sensitive adhesive layer formed on one face of the base and a bubble-free pressure-sensitive adhesive layer formed on the other face of the base, and the like.

The acrylic pressure-sensitive adhesive tape according to the present invention may be a single separator-type adhesive tape in a configuration in which the pressure-sensitive adhesive face is protected only with one release liner, or a double separator-type adhesive tape in a configuration in which the pressure-sensitive adhesive face is protected with two release liners.

In addition, the acrylic pressure-sensitive adhesive tape may be formed as it is wound around a roll or in a form in which the sheets are stacked. More specifically, the acrylic pressure-sensitive adhesive tape according to the present invention may have a form such as of sheet or tape. When the acrylic pressure-sensitive adhesive tape is in the form wound around a roll, for example, it may be prepared by winding the pressure-sensitive adhesive layer, such as the bubble-mixed inorganic filler-containing acrylic pressure-sensitive adhesive layer around a roll, as it is protected with a release coating layer formed on the rear-face side of the release liner or base.

The acrylic pressure-sensitive adhesive tape according to the present invention may have other layers (such as intermediate layer, undercoat layer and others) in the range that does not impair the advantageous effects of the invention.

### (Bubble-mixed inorganic filler-containing acrylic pressure-sensitive adhesive layer)

The bubble-mixed inorganic filler-containing acrylic pressure-sensitive adhesive layer (bubble-mixed inorganic filler-containing acrylic adhesive layer), which has a bubble structure containing bubbles, is compatible with curved and irregular surfaces and also with flexing of the adherend, and thus adheres to the adherend reliably via a sufficiently large adhesion area and can show high shear adhesive strength and repulsion resistance because it is superior in stress relaxation property (stress dispersion property).

The bubbles contained in the bubble-mixed inorganic filler-containing acrylic pressure-sensitive adhesive layer are desirably essentially independent bubble-type bubbles, but may be a mixture of close-type bubbles and open cell-type bubbles.

The bubble normally has a spherical shape (in particular, completely spherical shape), but may have an irregular-shaped spherical shape. The average bubble diameter of the bubbles is not particularly limited, but can be selected, for example, in the range of 1 to 1000 µm (preferably 10 to 500 µm, and more preferably 30 to 300 µm).

The gas component (bubble-forming gas component; referred to as "bubble-forming gas") contained in the bubble is not particularly limited, and various gas components including air as well as inert gases such as nitrogen, carbon dioxide and argon can be used. If reactions such as polymerization reaction are carried out in the presence of the bubble-forming gas, it is important to use a bubble-forming gas that does not inhibit the reactions. The bubble-forming gas is preferably nitrogen from the viewpoints of reaction inhibition and cost.

The amount of the bubbles in the bubble-mixed inorganic filler-containing acrylic pressure-sensitive adhesive layer is not particularly limited and may vary according to the application of the acrylic pressure-sensitive adhesive tape used, but may be, for example, 10 % or more (preferably 11 % or more, and more preferably 12 % or more) with respect to the total volume of the bubble-mixed inorganic filler-containing acrylic pressure-sensitive adhesive layer. The maximum amount of the bubbles in the bubble-mixed inorganic filler-containing acrylic pressure-sensitive adhesive layer is not particularly limited, and may be, for example, 50 % or less (preferably 40 % or less, and more preferably 30 % or less).

A form of the bubbles formed in such a bubble-mixed inorganic filler-containing acrylic pressure-sensitive adhesive layer is not particularly limited. The bubble-mixed inorganic filler-containing acrylic pressure-sensitive adhesive layer is, for example, (1) a bubble-mixed inorganic filler-containing acrylic pressure-sensitive adhesive layer in a form in which the bubbles are formed by using an acrylic monomer mixture containing a bubble-forming gas component (bubble-forming gas) previously mixed (hereinafter, referred to as "bubble-mixed acrylic monomer mixture"), or (2) a bubble-mixed inorganic filler-containing acrylic pressure-sensitive adhesive layer in a form in which the bubbles are formed by using an acrylic monomer mixture containing a foaming agent. In the present invention, the bubble-mixed inorganic filler-containing acrylic pressure-sensitive adhesive layer is preferably a bubble-mixed inorganic filler-containing acrylic pressure-sensitive adhesive layer in which the bubbles are formed by using a bubble-mixed acrylic monomer mixture. The amount of the bubbles in the bubble-mixed acrylic monomer mixture can be selected properly in the range suitable for the amount of the bubbles in the bubble-mixed inorganic filler-containing acrylic pressure-sensitive adhesive layer.

The bubble-mixed inorganic filler-containing acrylic pressure-sensitive adhesive layer contains, normally as its base polymer, an acrylic polymer formed from an acrylic monomer mixture containing an alkyl (meth)acrylate ester (a) having an alkyl group having a carbon number of 1 to 14 as the principal monomer component and at least one polar group-containing vinyl monomer (b) as the copolymerizable monomer.

The component rate of the alkyl (meth)acrylate ester (a) having an alkyl group having a carbon number of 1 to 14 to the polar group-containing vinyl monomer (b), [(a)/(b)], in the acrylic monomer mixture forming the acrylic polymer is 95/5 to 91/9 (preferably 94/6 to 91/9, and more preferably 94/6 to 92/8) by weight. When the polar group-containing vinyl monomer (b) is used in the acrylic polymer-forming acrylic monomer mixture in an amount more than the ratio of the alkyl (meth)acrylate ester (a) having an alkyl group having a carbon number of 1 to 14 to the polar group-containing vinyl monomer (b), (a)/(b), of 91/9 by weight (in other words, when the content of the polar group-containing vinyl monomer (b) is larger than the range above), the bubble-mixed inorganic filler-containing acrylic pressure-sensitive adhesive layer may become harder, possibly leading to deterioration in low temperature adhesiveness. Alternatively, when the polar group-containing vinyl monomer (b) is used in the acrylic polymer-forming acrylic monomer mixture in an amount less than the ratio of the alkyl (meth)acrylate ester (a) having an alkyl group having a carbon number of 1 to 14 to the polar group-containing vinyl monomer (b), (a)/(b), of 95/5 by weight (in other words, when the content of the polar group-containing vinyl monomer (b) is smaller than the range above), the bubble-mixed inorganic filler-containing acrylic pressure-sensitive adhesive layer may show deterioration in cohesive power and also in adhesiveness under ambient atmosphere.

The rate of the total of the alkyl (meth)acrylate ester (a) having an alkyl group having a carbon number of 1 to 14 and the polar group-containing vinyl monomer (b) is 90 wt % or more (preferably 95 wt % or more) with respect to the total amount of the acrylic polymer-forming monomer components.

The alkyl (meth)acrylate ester (a) having an alkyl group having a carbon number of 1 to 14 is normally a linear - or branched-chain alkyl (meth)acrylate ester containing an alkyl group having a carbon number of 1 to 14, and examples thereof include methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, and the like. Among them, alkyl (meth)acrylate esters containing a straight- or branched-chain linear alkyl group having a carbon number of 2 to 10 are preferable, and 2-ethylhexyl (meth)acrylate and isooctyl (meth)acrylate are particularly preferable. The alkyl (meth)acrylate ester (a) having an alkyl group having a carbon number of 1 to 14 may be used alone or in combination of two or more. The term "(meth)acrylic" means "acrylic and/or methacrylic".

Examples of the polar group-containing vinyl monomers (b) include carboxyl group-containing monomers such as (meth)acrylic acid, itaconic acid, maleic acid, fumaric acid, crotonic acid, and isocrotonic acid, or the anhydrides thereof (such as maleic anhydride); hydroxyl group-containing monomers such as hydroxyalkyl (meth)acrylates (such as hydroxyethyl (meth)acrylate, hydroxypropyl (meth)acrylate, and hydroxybutyl (meth)acrylate); amide group-containing monomers such as acrylamide, methacrylamide, N,N-dimethyl(meth)acrylamide, N-methylol(meth)acrylamide, N-methoxy methyl(meth)acrylamide, and N-butoxymethyl(meth)acrylamide; amino-group-containing monomers such as aminoethyl (meth)acrylate, dimethylaminoethyl (meth)acrylate, and t-butylaminoethyl (meth)acrylate; glycidyl group-containing monomers such as glycidyl (meth)acrylate and methylglycidyl (meth)acrylate; cyano group-containing monomers such as acrylonitrile and methacrylonitrile; heterocyclic ring-containing vinyl monomers such as N-vinyl-2-pyrrolidone, (meth)acryloylmorpholine, N-vinylpyridine, N-vinylpiperidone, N-vinylpyrimidine, N-vinylpiperazine, N-vinylpyrazine, N-vinylpyrrole, N-vinylimidazole, and N-vinyloxazole; and the like. The polar group-containing vinyl monomer (b) is preferably a carboxyl group-containing monomer or the anhydride thereof, and acrylic acid is particularly preferable. The polar group-containing vinyl monomers (b) may be used alone or in combination of two or more.

In addition, copolymerizable monomers such as polyfunctional monomers may be used as a monomer component of the acrylic polymer.

Examples of the polyfunctional monomers include hexanediol di(meth)acrylate, butanediol di(meth)acrylate, (poly)ethylene glycol di(meth)acrylate, (poly)propylene glycol di(meth)acrylate, neopentylglycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylates, polyester acrylates, urethane acrylates, and the like.

The amount of the polyfunctional monomers used is 2 wt % or less (for example, 0.01 to 2 wt %), and preferably 0.02 to 1 wt % with respect to the total amount of the acrylic polymer-forming monomer components. When the amount of the polyfunctional monomers used is more than 2 wt % with respect to the total amount of the acrylic polymer-forming monomer components, for example, the cohesive power of the bubble-mixed inorganic filler-containing acrylic pressure-sensitive adhesive may increase excessively, leading to deterioration in pressure-sensitive adhesiveness. Alternatively when the amount of the polyfunctional monomers used is too low (for example, less than 0.01 wt % with respect to the total amount of the acrylic polymer-forming monomer components), for example, the cohesive power of the bubble-mixed inorganic filler-containing acrylic pressure-sensitive adhesive layer may decrease.

Examples of the copolymerizable monomers other than the polyfunctional monomers include (meth)acrylic esters other than the alkyl (meth)acrylate ester (a) having an alkyl group having a carbon number of 1 to 14 described above, including alicyclic hydrocarbon group-containing (meth)acrylic esters such as cyclopentyl (meth)acrylate, cyclohexyl (meth)acrylate, and isobornyl (meth)acrylate and aromatic hydrocarbon group-containing (meth)acrylic esters such as phenyl (meth)acrylate; vinyl esters such as vinyl acetate and vinyl propionate; aromatic vinyl compounds such as styrene and vinyltoluene; olefins or dienes such as ethylene, butadiene, isoprene and isobutylene; vinyl ethers such as vinyl alkyl ethers; vinyl chloride, and the like.

The acrylic polymer can be prepared by a known or common polymerization method. The polymerization method is, for example, solution polymerization, emulsion polymerization, bulky polymerization, photopolymerization, or the like. Among the polymerization methods above, in the present invention, use of a curing reaction by heat or irradiation with active energy ray in the presence of a polymerization initiator such as thermal polymerization initiator or photopolymerization initiator (photoinitiator) in preparation of the acrylic polymer is preferable from the viewpoints of processability and stabilized production of bubble structure. It is thus preferable in the present invention to form an acrylic polymer by curing polymerization induced by active energy ray irradiation of the acrylic monomer mixture containing at least an alkyl (meth)acrylate ester (a) having an alkyl group having a carbon number of 1 to 14, polar group-containing vinyl monomer (b), and a polymerization initiator or the partial polymer thereof.

Since the presence of a polymerization initiator (e.g., thermal polymerization or photopolymerization initiator) as described above, permits curing by heat or active energy ray, it is possible to form a bubble-mixed inorganic filler-containing acrylic pressure-sensitive adhesive layer having a structure in which bubbles are contained as stabilized by forming the bubble-mixed inorganic filler-containing acrylic pressure-sensitive adhesive layer as it is cured in a state where the bubbles are mixed with the acrylic monomer mixture.

In particular, use of a photopolymerization method of using a photopolymerization initiator as the polymerization initiator is preferable because of the advantage that the polymerization period can be shortened. It is thus preferable to form a bubble-mixed inorganic filler-containing acrylic pressure-sensitive adhesive layer having a stabilized bubble structure by polymerization with active energy ray. The polymerization initiators may be used alone or in combination of two or more.

The photopolymerization initiators are not particularly limited and examples thereof include benzoin ether-based photopolymerization initiators, acetophenone-based photopolymerization initiators, α-ketol-based photopolymerization initiators, aromatic sulfonyl chloride-based photopolymerization initiators, optically active oxime-based photopolymerization initiators, benzoin-based photopolymerization initiators, benzyl-based photopolymerization initiators, benzophenone-based photopolymerization initiators, ketal-based photopolymerization initiators, thioxanthone-based photopolymerization initiators, and the like.

Specifically, examples of the benzoin ether-based photopolymerization initiators include benzoin methyl ether, benzoin ethyl ether, benzoin propyl ether, benzoin isopropyl ether, benzoin isobutyl ether, 2,2-dimethoxy-1,2-diphenyl ethane-1-one, anisole methyl ether, and the like. Examples of the acetophenone-based photopolymerization initiators include 2,2-diethoxyacetophenone, 2,2-dimethoxy-2-phenylacetophenone, 1-hydroxycyclohexylphenylketone, 4-phenoxydichloroacetophenone, 4-t-butyl-dichloroacetophenone, and the like. Examples of the α-ketol-based photopolymerization initiators include 2-methyl-2-hydroxypropiophenone, 1-[4-(2-hydroxyethyl)-phenyl]-2-hydroxy-2-methylpropan-1-one, and the like. Examples of the aromatic sulfonyl chloride-based photopolymerization initiators include 2-naphthalenesulfonyl chloride, and the like. Examples of the optically active oxime-based photopolymerization initiators include 1-phenyl-1,3-propanedione-2-(o-ethoxycarbonyl)-oxime, and the like.

Examples of benzoin-based photopolymerization initiators include benzoin and the like. Examples of the benzyl-based photopolymerization initiators include benzyl, and the like. Examples of the benzophenone-based photopolymerization initiators include benzophenone, benzoylbenzoic acid, 3,3'-dimethyl-4-methoxybenzophenone, polyvinylbenzophenone, α- hydroxycyclohexylphenylketone, and the like. Examples of the ketal-based photopolymerization initiators include benzyl dimethyl ketal, and the like. Examples of the thioxanthone-based photopolymerization initiators include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, dodecylthioxanthone, and the like.

The amount of the photopolymerization initiator added is not particularly limited as long as the acrylic polymer is prepared by photopolymerization, but can be selected, for example, in the range of 0.01 to 5 parts by weight (preferably 0.05 to 3 parts by weight) with respect to 100 parts by weight of the all monomer components forming the acrylic polymer which is the base polymer of the bubble-mixed inorganic filler-containing acrylic pressure-sensitive adhesive.

In activation of the photopolymerization initiator, it is important to irradiate the acrylic monomer mixture with active energy ray. Examples of the active energy ray include ionizing radiation such as α ray, β rays, γ ray, neutron beam, and electron beam; ultraviolet ray; and the like, and in particular, ultraviolet ray is preferable. The irradiation energy, the exposure period, and the irradiation method of the active energy ray are not particularly limited as long as they are suitable for activation of the photopolymerization initiator and induction of the reaction between monomer components.

Examples of the thermal polymerization initiators include azo-based polymerization initiators [such as 2,2'-azobisisobutylonitrile, 2,2'-azobis-2-methylbutylonitrile, dimethyl 2,2'-azobis(2-methylpropionate), 4,4'-azobis-4-cyanovalerianic acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate salt and 2,2'-azobis(N,N'-dimethyleneisobutylamidine) dihydrochloride], peroxide-based polymerization initiators (such as dibenzoyl peroxide and tert-butyl permaleate), redox-based polymerization initiators, and the like. The amount of the thermal polymerization initiator used is not particularly limited as long as it is in the range traditionally usable as a thermal polymerization initiator.

The bubble-mixed inorganic filler-containing acrylic pressure-sensitive adhesive layer contains an inorganic filler additionally. The bubble-mixed inorganic filler-containing acrylic pressure-sensitive adhesive layer has an improved cohesive power and heat resistance with the inorganic filler.

The method of containing the inorganic filler into the bubble-mixed inorganic filler-containing acrylic pressure-sensitive adhesive layer is not particularly limited, and may be, for example, a method of forming a pressure-sensitive adhesive constituting the bubble-mixed inorganic filler-containing acrylic pressure-sensitive adhesive layer and then blending and mixing an inorganic filler with the pressure-sensitive adhesive, or a method of blending and mixing an inorganic filler with an acrylic monomer mixture or the partial polymer thereof forming the acrylic polymer. In particular, the method of blending and mixing an inorganic filler with an acrylic monomer mixture forming the acrylic polymer or the partial polymer thereof is preferable from the viewpoint of processability.

Examples of the inorganic fillers include silica compounds such as hydrophobic silica, alumina, silicone (silicone powder), calcium carbonate, clay, titanium oxide, talc, layered silicate salts, clay mineral, glass, glass beads, glass balloons, alumina balloons, ceramic balloons, titanium white, titania, zirconia, carbons (such as carbon black, carbon nanotube, etc.), metal particles (such as of magnesium, aluminum, zirconium, silicon, calcium, titanium, vanadium, chromium, cobalt, nickel, copper, germanium, molybdenum, rhodium, silver, indium, tin, tungsten, iridium, platinum, iron, gold, etc.), metal oxide particles (such as of iron oxide, indium oxide, stannic oxide, chromium oxide, nickel oxide, copper oxide, titanium oxide, zirconium oxide, aluminum oxide, zinc oxide, antimony oxide, calcium oxide, cadmium oxide, etc.), and the like. Alternatively, it may be a silica gel supporting a metal oxide (such as the metal oxide described above, in particular for example titanium oxide). Yet alternatively, hollow inorganic microspheres may be used. The inorganic fillers can be used alone or in combination of two or more.

For reduction in weight, among them,silica compounds such as hydrophobic silica and also hollow inorganic microspheres including hollow glass microspheres such as hollow glass balloons; hollow balloon metal compounds such as hollow alumina balloons; and ceramic hollow balloons such as hollow ceramic balloons are preferable, and hollow glass microspheres are particularly preferable. It is possible, by using such a silica compound or hollow inorganic microspheres, to make the bubble-mixed inorganic filler-containing acrylic pressure-sensitive adhesive layer satisfy the lowest requirement in strength as a pressure-sensitive adhesive.

The particle diameter (average particle diameter) of the hollow inorganic microspheres is not particularly limited, but can be selected, for example, in the range of 1 to 500 µm (preferably 5 to 200 µm, and more preferably 10 to 100 µm).

The specific density of the hollow inorganic microspheres is not particularly limited, but can be selected, for example, in the range of 0.1 to 0.8 g/cm³ (preferably 0.12 to 0.5 g/cm³). When the specific density of the hollow microspheres is less than 0.1 g/cm³, the hollow inorganic microspheres float easily when the hollow inorganic microspheres are blended and mixed with the pressure-sensitive adhesive or the composition containing the acrylic mixtures or the partial polymer thereof, prohibiting uniform dispersion of the hollow inorganic microspheres, while a specific density of more than 0.8 g/cm³ leads to increase in cost, only giving a more expensive bubble-mixed inorganic filler-containing acrylic pressure-sensitive adhesive layer.

Various surface treatments (such as surface tension-reducing treatment by using a silicone- or fluorine-based compound) may be applied to the surface of the hollow inorganic microspheres.

The amount of the inorganic filler used can be selected in the range of 0.1 parts by weight or more and less than 2 parts by weight, and preferably 0.1 parts by weight or more and less than 0.7 parts by weight with respect to 100 parts by weight of the all monomer components forming the acrylic polymer which is the base polymer of the bubble-mixed inorganic filler-containing acrylic pressure-sensitive adhesive layer. When the amount of the inorganic filler used is less than 0.1 parts by weight with respect to 100 parts by weight of the all monomer components forming the acrylic polymer which is the base polymer of the bubble-mixed inorganic filler-containing acrylic pressure-sensitive adhesive layer, the bubbles may not be finely dispersed. Alternatively when it is an amount of more than 2 parts by weight or more, there may be formed irregularity at the interface between the bubble-mixed inorganic filler-containing acrylic pressure-sensitive adhesive layer and the adherend, possibly leading to reduction of adhesion area and deterioration in adhesive strength during use of the acrylic pressure-sensitive adhesive tape.

The bubble-mixed inorganic filler-containing acrylic pressure-sensitive adhesive layer may contain additionally additives suitable for the application of the acrylic pressure-sensitive adhesive tape.

In the present invention, it is preferable to contain a surfactant to the bubble-mixed inorganic filler-containing acrylic pressure-sensitive adhesive layer from the viewpoints of reduction of the adhesiveness and friction resistance between the inorganic filler and the polymer and improvement of the mixing efficiency and stability of the bubbles and others. Such a surfactant may be, for example, an ionic surfactant, a silicone-based surfactant, and a fluorochemical surfactant. In particular, fluorochemical surfactants are preferable, and fluorochemical surfactants having an oxyC₂-₃ alkylene group and a fluorinated hydrocarbon group in the molecule are more preferably used. Further among them, non-ionic surfactants are preferable from the viewpoint of dispersion efficiency in the base polymer. The fluorochemical surfactants may be used alone or in combination of two or more. The fluorochemical surfactants described in Japanese Unexamined Patent Publication 2006-022189 are preferably used as the fluorochemical surfactants.

The fluorochemical surfactant for use may be a commercial product and, for example, "Surflon S-393" (trade mark, ,anufactured by Seimi Chemicals Co., Ltd.) is used preferably.

Examples of the other additives include crosslinking agents (such as polyisocyanate-based crosslinking agents, silicone-based crosslinking agents, epoxy-based crosslinking agents, alkyl-etherified melamine-based crosslinking agents and others), tackifiers (resins solid, semisolid or liquid at room temperature such as rosin-derived resins, polyterpene resins, petroleum resins and oil-soluble phenol resins), plasticizers, fillers other than the inorganic fillers above, aging inhibitors, antioxidants, colorants (pigments, dyes and others) and the like.

When the acrylic polymer, i.e., the base polymer for the bubble-mixed inorganic filler-containing acrylic pressure-sensitive adhesive layer, is formed for example, by curing and polymerization of an acrylic monomer mixture at least containing an alkyl (meth)acrylate ester (a) having an alkyl group having a carbon number of 1 to 14, a polar group-containing vinyl monomer (b), and a photopolymerization initiator, or the partial polymer thereof by radiation of active energy ray, a pigment (color pigment) may be used for coloring the bubble-mixed inorganic filler-containing acrylic pressure-sensitive adhesive layer in an amount that does not inhibit the photopolymerization reaction. When the bubble-mixed inorganic filler-containing acrylic pressure-sensitive adhesive layer is desirably colored in black, carbon black may be used as the color pigment. The amount of the carbon black used is desirably selected, for example, in the range of 0.15 parts by weight or less (for example, 0.001 to 0.15 parts by weight), and preferably 0.02 to 0.1 parts by weight with respect to 100 parts by weight of all monomer components forming the acrylic polymer which is the base polymer for the bubble-mixed inorganic filler-containing acrylic pressure-sensitive adhesive layer, from the viewpoint of chromaticity and of inhibition of the photopolymerization reaction.

When the bubble-mixed inorganic filler-containing acrylic pressure-sensitive adhesive layer is a bubble-mixed inorganic filler-containing acrylic pressure-sensitive adhesive layer in the form having bubbles formed therein by using a foaming agent-containing acrylic monomer mixture, the foaming agent is not particularly limited, but can be selected suitably, for example, from known foaming agents. The foaming agent used may be, for example, thermally expandable microspheres.

In the present invention, when the bubble-mixed inorganic filler-containing acrylic pressure-sensitive adhesive layer is a bubble-mixed inorganic filler-containing acrylic pressure-sensitive adhesive layer in the form having bubbles formed therein by using a bubble-mixed acrylic monomer mixture, it is preferable to blend and mix the bubbles as the last component to be blended to the bubble-mixed acrylic monomer mixture, in particular to raise the viscosity of the acrylic monomer mixture before mixing with the bubbles for stabilized dispersion of the bubbles in the bubble-mixed inorganic filler-containing acrylic pressure-sensitive adhesive layer. The viscosity is not particularly limited as long as it is a viscosity allowing consistent presence of the mixed bubbles, and the viscosity, as determined for example by using a BH viscometer (rotor: No.5 rotor) under the condition of a rotating speed of 10 rpm and a measurement temperature of 30°C, is desirably 5 to 50 Pa·s (preferably 10 to 40 Pa·s). When the viscosity (BH viscometer, No.5 rotor, 10 rpm, 30°C) is less than 5 Pa·s, the mixed bubbles may coalesce and thus be removed from the system because the viscosity is too low, while when it is more than 50 Pa·s, it may be difficult to form the bubble-mixed inorganic filler-containing acrylic pressure-sensitive adhesive layer because the viscosity is too high.

The viscosity of the acrylic monomer mixture before mixing with bubbles can be adjusted, for example, by a method of blending various polymer components such as acrylic rubbers and thickening additives or a method of partially polymerizing the monomer components for preparation of the acrylic polymer which is the base polymer of the pressure-sensitive adhesive. Specifically, there is, for example, a method of blending a polymerization initiator (for example, photopolymerization initiator) with an acrylic monomer mixture at least containing an alkyl (meth)acrylate (a) having a carbon number of 1 to 14 and a polar group-containing vinyl monomer (b) and preparing a polymerized composition (sirup) by polymerization of only part of the monomer components by carrying out polymerization reaction of the monomer mixture according to the kind of the polymerization initiator.

It is possible in the present invention to prepare an inorganic filler-containing acrylic pressure-sensitive adhesive composition having a viscosity suitable for keeping the bubbles dispersed consistently by blending an inorganic filler and, as needed, various additives with the sirup. It is thus possible to obtain a bubble-mixed inorganic filler-containing acrylic pressure-sensitive adhesive composition by incorporating and mixing bubbles with the inorganic filler-containing acrylic pressure-sensitive adhesive composition.

The method of mixing bubbles is not particularly limited, and a known bubble-mixing method can be used. An example of such an apparatus is an apparatus equipped with a disk having a through-hole at the center, a stator having many small gears, and a rotor having many small gears similar to those of the stator, which faces each other, on the disk. In the apparatus, it is possible to obtain a bubble-mixed inorganic filler-containing acrylic pressure-sensitive adhesive composition containing bubbles and an inorganic filler, in which the bubbles of the bubble-forming gas are dispersed and mixed finely in the inorganic filler-containing acrylic pressure-sensitive adhesive composition, for example, by introducing an inorganic filler-containing acrylic pressure-sensitive adhesive composition into the space between the gears of the stator and the gears of the rotor and incorporating a bubble-forming gas component (bubble-forming gas) through the through-hole into the inorganic filler-containing acrylic pressure-sensitive adhesive composition, while the rotor is rotated at high speed.

It is preferable for suppression or prevention of the coalescence of bubbles to carry out the steps from bubble mixing to formation of the bubble-mixed inorganic filler-containing acrylic pressure-sensitive adhesive layer continuously as a series of steps. Specifically, the bubble-mixed inorganic filler-containing acrylic pressure-sensitive adhesive layer is preferably formed by using a known method of forming a pressure-sensitive adhesive layer and by using the bubble-mixed inorganic filler-containing acrylic pressure-sensitive adhesive composition that is prepared previously by bubble mixing as described above. More specifically, it is possible to form a bubble-mixed inorganic filler-containing acrylic pressure-sensitive adhesive layer, for example, by coating the bubble-mixed inorganic filler-containing acrylic pressure-sensitive adhesive composition on a particular face, and drying and curing the coated layer as needed. In formation of the bubble-mixed inorganic filler-containing acrylic pressure-sensitive adhesive layer, it is preferable, as described above, to cure the layer by heating or irradiation with active energy ray. It is thus possible to form a bubble-mixed inorganic filler-containing acrylic pressure-sensitive adhesive layer favorably by using a bubble-mixed inorganic filler-containing acrylic pressure-sensitive adhesive composition containing a polymerization initiator such as thermal or photopolymerization initiator, and by coating the bubble-mixed filler-containing acrylic pressure-sensitive adhesive composition on a particular face and curing the coated layer by heating or irradiation with active energy ray in a state in which bubbles are kept firmly.

The bubble-mixed inorganic filler-containing acrylic pressure-sensitive adhesive layer may have a single-layer form or a multi-layer form. The thickness of the bubble-mixed inorganic filler-containing acrylic pressure-sensitive adhesive layer is not particularly limited but can be selected, for example, in the range of 200 to 5000 µm (preferably 300 to 4000 µm, more preferably 400 to 3000 µm). A thickness of the bubble-mixed inorganic filler-containing acrylic pressure-sensitive adhesive layer of less than 200 µm leads to deterioration in cushioning property and adhesiveness to curved or irregular surface, while a thickness of more than 5000 µm prohibits preparation of the layer with uniform thickness.

### (Base)

When the acrylic pressure-sensitive adhesive tape according to the present invention is a base-bound acrylic pressure-sensitive adhesive tape, examples of the bases include, but are not particularly limited to, sheet-formed materials such as paper-based bases such as paper; fiber-based bases such as woven and nonwoven fabrics, and nets (examples of the favorable raw materials thereof include, but are not particularly limited to, manila hemp, rayon, polyester, pulp fiber, and others); metal-based bases such as metal foils and metal plates; plastic-based bases such as plastic films and sheets; rubber-based bases such as rubber sheets; foams such as foam sheets, and the laminated sheets of these bases (such as laminated sheets of a plastic-based base and another base and laminated sheets of multiple plastic films (or sheets)). The base preferable for use is a plastic-based base such as plastic film or sheet. Examples of the raw materials for the plastic film or sheet include, olefin resins containing an α-olefin as the monomer component such as polyethylene (PE), polypropylene (PP), ethylene-propylene copolymers, ethylene-vinyl acetate (EVA) copolymers; polyester resins such as polyethylene terephthalate (PET), polyethylene naphthalate (PEN), and polybutylene terephthalate (PBT); polyvinyl chloride (PVC); vinyl acetate resins; polyphenylene sulfide (PPS); amide resins such as polyamides (nylon) and wholly aromatic polyamides (aramid); polyimide resins; polyether ether ketone (PEEK), and the like. These raw materials may be used alone or in combination of two or more.

When a plastic-based base is used as the base, it may be previously stretched for regulation, for example, of the deformation efficiency such as elongation. When the bubble-mixed inorganic filler-containing acrylic pressure-sensitive adhesive layer is formed by curing with active energy ray, the base used is preferably a material that does not inhibit transmission of the active energy ray.

For improvement in adhesiveness for example to the bubble-mixed inorganic filler-containing acrylic pressure-sensitive adhesive layer, the surface of the base may be subjected to common surface treatment. For example, it may be oxidized chemically or physically, for example, by corona treatment, chromate treatment, ozone exposure, flame exposure, high-pressure electric shock exposure or ionizing radiation treatment or may be coated, for example, with an undercoat or release agent.

The thickness of the base is selected arbitrarily according to the strength, flexibility, application, or the like and for example, generally 1000 µm or less (for example, 1 to 1000 µm), preferably approximately 1 to 500 µm and more preferably 3 to 300 µm, but the thickness is not limited thereto. The base may have a single-layer form or a multi-layer form.

### (Bubble-free pressure-sensitive adhesive layer)

The bubble-free pressure-sensitive adhesive layer is prepared by a known method of preparing a pressure-sensitive adhesive layer, for example, by using a known pressure-sensitive adhesive (such as acrylic pressure-sensitive adhesive, rubber-based pressure-sensitive adhesive, vinyl alkyl ether-based pressure-sensitive adhesive, silicone-based pressure-sensitive adhesive, polyester-based pressure-sensitive adhesive, polyamide-based pressure-sensitive adhesive, urethane-based pressure-sensitive adhesive, fluorine-based pressure-sensitive adhesive, epoxy-based pressure-sensitive adhesive and the like). The thickness of the bubble-free pressure-sensitive adhesive layer is not particularly limited and selected properly, for example, according to application and use method.

### (Release liner)

A release liner is used in the acrylic pressure-sensitive adhesive tape according to the present invention for protection of its tacky face. Such a release liner for use is "a release liner in an at least 3-layered structure, having a low-density polyethylene layer as one surface layer, a mixed resin layer containing a low-density polyethylene and a high-density polyethylene as resin components as the other surface layer, and additionally, a high-density polyethylene layer as the intermediate layer" (referred to as "polyethylene release liner in a particular laminated structure"), because it is superior in releasability from the tacky face and suppression of the liner pop-off (partial separation of the release liner from the pressure-sensitive adhesive layer during storage).

The polyethylene release liner in a particular laminated structure is superior in releasability when used in combination with the pressure-sensitive adhesive layer with the particular composition described above and also suppression of the liner pop-off when stored in a state in which the acrylic pressure-sensitive adhesive tape is bent. It is also superior in recycling property, because it has a simple structure only having polyethylene layers.

The "high-density polyethylene" in the present invention is a polyethylene having a density, as determined according to JIS K6922-2, of 930 (kg/m³) or more, while the "low-density polyethylene" is a polyethylene having a density, as determined according to JIS K6922-2, of 865 (kg/m³) or more and less than 930 (kglm³). The "low-density polyethylene" in the present invention is defined as a generic term including long-chain branched polyethylenes (the branched chain length is not particularly limited) obtained by high-pressure polymerization of ethylene monomer, so-called "low-density polyethylenes" and "ultralow-density polyethylenes", so-called "straight-chain low-density polyethylenes" obtained by low-pressure polymerization of ethylene and an α-olefin monomer having a carbon number of 3 to 8 (the length of the branched chain then is equivalent to a carbon number of 1 to 6), and additionally "ethylene-α-olefin copolymeric elastomers" having a density in the range above.

The low-density polyethylene layer as the surface layer of the polyethylene release liner in a particular laminated structure contains practically only a low-density polyethylene as its essential component. Specifically, the rate of the low·density polyethylene in the resin components constituting the surface layer should be 95 wt % or more, and preferably 99 wt % or more. The "low-density polyethylene" here may be a single polyethylene or a blend of multiple polyethylenes, and the content described above is applied to the total amount of the multiple low-density polyethylenes. The low-density polyethylenes include straight-chain low-density polyethylenes. The polyethylene release liner in a particular laminated structure has difference in releasability (difference in peeling power) between a low-density polyethylene layer as one surface layer and the other surface layer.

The low-density polyethylene preferably has a density of 890 (kg/m³) or more and less than 930 (kg/m³).

The low-density polyethylene layer used as surface layer may contain various additives, such as pigments, fillers, lubricants, aging inhibitors and others other than the resin components above in the ranges that do not impair the advantageous effects of the present invention.

The thickness of the low-density polyethylene layer used as surface layer is preferably 2.5 to 250 µm, and more preferably 5 to 100 µm for expression of its preferable releasability.

In the polyethylene release liner in a particular laminated structure, a mixed resin layer containing a low-density polyethylene and a high-density polyethylene as resin components is used as the other surface layer. Thus, the release liner is suppression of the liner pop-off and exhibits preferable releasability.

The mixed resin layer containing a low-density polyethylene and a high-density polyethylene as the resin components contains a low-density polyethylene and a high-density polyethylene at a low-density polyethylene/high-density polyethylene weight ratio of 10/90 to 90/10 (preferably, 30/70 to 90/10). Low mixing rate of the low-density polyethylene leads to improvement in suppressing effect of the liner pop-off, while high mixing rate of low-density polyethylene leads to preferable releasability, and thus, the mixing rate can be selected properly from the viewpoints of the various properties and the flexibility of the entire sheet of the present invention.

The high-density polyethylene preferably has a density of 942 (kg/m³) or more and less than 960 (kg/m³).

The thickness as surface layer of the mixed resin layer, containing a low-density polyethylene and a high-density polyethylene as resin components is preferably 25 to 250 µm, and more preferably 5 to 100 µm for expression of preferable releasability.

The high-density polyethylene layer used as the intermediate layer in the polyethylene release liner in a particular laminated structure contains practically only a high-density polyethylene as its essential component. Specifically, the high-density polyethylene should be present in an amount of 95 wt % or more, and preferably 99 wt % or more in the resin components constituting the intermediate layer. The "high-density polyethylene" may be a single polyethylene or a blend of multiple polyethylenes, and the content described above is applied to the total amount of the multiple high-density polyethylenes. When only a high-density polyethylene is used as the intermediate layer in the polyethylene release liner in a particular laminated structure, it is possible to raise the rigidity of the entire release liner and improve the handleability and processability.

The polyethylene release liner in a particular laminated structure may have an intermediate layer other than the high-density polyethylene layer (other intermediate layer) in the range that does not impair the advantageous effects of the present invention. Examples of the intermediate layers include adhesive layers for improvement of interlayer adhesive strength, color layers, other functionalizing layers, and the like.

The high-density polyethylene layer used as the intermediate layer may contains various additives other than the resin components above such as pigments, fillers, lubricants, and aging inhibitors in the amount within the ranges that do not impair the advantageous effects of the present invention.

The thickness of high-density polyethylene layer used as the intermediate layer is preferably 5 to 480 µm, and more preferably 10 to 180 µm for control of rigidity.

The polyethylene release liner in a particular laminated structure has the balance between releasability and strength kept in a suitable range by controlling the balance between the ratio of the surface layer and the intermediate layer when it has a surface layer and an intermediate layer separately formed.

Both of the surface layers of the polyethylene release liner in a particular laminated structure may be used as release layers. In particular, it is preferable to use a low-density polyethylene layer as a low peeling power-sided face and a mixed resin layer containing a low-density polyethylene and a high-density polyethylene as resin components as a high peeling power-sided face. In the acrylic pressure-sensitive adhesive tape according to the present invention, a bubble-mixed inorganic filler-containing acrylic adhesive layer is normally formed on the mixed resin layer containing a low-density polyethylene and a high-density polyethylene as resin components, and the low-density polyethylene layer plays a role to permit smooth rewinding as the rear-face layer, for example when the acrylic pressure-sensitive adhesive tape is wound.

The polyethylene release liner in a particular laminated structure preferably contains practically only a low-density polyethylene and a high-density polyethylene as resin components because the recycling property of the release liner can be improved. The amount of the resin components other than the low-density polyethylene and the high-density polyethylene is preferably less than 20 wt %, and more preferably less than 10 wt % with respect to the all resin components in the release liner.

The thickness of the polyethylene release liner in a particular laminated structure is preferably 500 µm or less, more preferably 200 µm or less, and still more preferably 150 µm or less, from the viewpoint of flexibility required when it is stored as wound around a roll. In addition, the thickness is preferably 10 µm or more, more preferably 30 µm or more, more preferably 50 µm or more, and most preferably 100 µm or more from the viewpoint of handle ability.

The polyethylene release liner in a particular laminated structure can be prepared by a known or common sheet-forming method such as melt casting (T die method or inflation molding method) or solution casting. The method of laminating the polyethylene release liner in a particular laminated structure is not particularly limited either, and a known or common method such as coextrusion, dry lamination, or wet lamination may be used. In particular, a co-extrusion method is preferable from the viewpoint of productivity.

In particularly among the methods above, use of a T die casting method is preferable because it gives a film superior in heat resistance. When the heat resistance is improved, it is possible to prevent partial lifting or peeling of the release liner (partial separation or exfoliation of the release liner), for example when the adherend (for example, weather strip rubber) is processed in a silicone-coating or silicone-baking step (for example, 120°C ×3 minutes) as the acrylic pressure-sensitive adhesive tape is bonded to the adherend via the tacky face of a bubble-mixed inorganic filler-containing acrylic pressure-sensitive adhesive layer while the other tacky face is protected with the polyethylene release liner in a particular laminated structure.

### [Acrylic pressure-sensitive adhesive tape]

The acrylic pressure-sensitive adhesive tape according to the present invention can be prepared by a known or common method of producing a pressure-sensitive adhesive tape. For example, a base-bound acrylic pressure-sensitive adhesive tape having a bubble-mixed inorganic filler-containing acrylic pressure-sensitive adhesive layer on one side of a base can be prepared by forming a bubble-mixed inorganic filler-containing acrylic pressure-sensitive adhesive composition layer by coating a bubble-mixed inorganic filler-containing acrylic pressure-sensitive adhesive composition containing bubbles and an inorganic filler on one side of a base; forming a bubble-mixed inorganic filler-containing acrylic pressure-sensitive adhesive layer by polymerization of the bubble-mixed inorganic filler-containing acrylic pressure-sensitive adhesive composition layer; and then bonding the release liner to the bubble-mixed inorganic filler-containing acrylic pressure-sensitive adhesive layer. It can also be prepared by forming a bubble-mixed inorganic filler-containing acrylic pressure-sensitive adhesive layer on the release liner and then laminating it onto one side of a base in the form in which the base and the bubble-mixed inorganic filler-containing acrylic pressure-sensitive adhesive layer are in contact with each other.

A base-less acrylic double-sided pressure-sensitive adhesive tape having only a bubble-mixed inorganic filler-containing acrylic pressure-sensitive adhesive can be prepared by forming a bubble-mixed inorganic filler-containing acrylic pressure-sensitive adhesive composition layer by coating a bubble-mixed inorganic filler-containing acrylic pressure-sensitive adhesive composition on the release liner and then forming a bubble-mixed inorganic filler-containing acrylic pressure-sensitive adhesive layer by polymerization of the bubble-mixed inorganic filler-containing acrylic pressure-sensitive adhesive composition layer.

Because such an acrylic pressure-sensitive adhesive tape has bubble-mixed inorganic filler-containing acrylic pressure-sensitive adhesive layer, it is superior in initial adhesiveness at low temperature (for example, at a temperature of about -20 to 5°C), shows high repulsion resistance, has an adhesion area sufficient for adhesion because it is compatible with curved and irregular surfaces and with flexing of the adherend, due to improvement in stress relaxation by the bubbles, and shows high shear adhesive strength and repulsion resistance because it is superior in stress relaxation property (stress dispersion property).

In addition, the acrylic pressure-sensitive adhesive tape according to the present invention is suppression of the liner pop-off of the release liner when stored in the bent state, and can be used easily as the release liner is removed for exposure of the bubble-mixed inorganic filler-containing acrylic pressure-sensitive adhesive layer upon use. Thus, it is used particularly preferably in applications as an adhesive sheet or tape for long or complicatedly-shaped parts and flexible parts.

The acrylic pressure-sensitive adhesive tape according to the present invention is superior in initial adhesiveness to hard-to-adhere adherends such as coatings (such as acid-rain resistant coatings and automotive coatings), paint plates, resin plates, metal plates such as steel plates, and coated plates (such as resin plates and metal plates (such as steel plates) having a coating such as acid rain-resistant coating or automotive coating). In particular, it is superior in initial adhesiveness to automotive coated plates such as automotive body.

Examples of the adherend coatings include, but are not particularly limited to, various coatings such as polyester-melamine-based, alkyd-melamine-based, acrylic-melamine-based, acrylic-urethane-based and acrylic-polyacid-curing agent-based coatings.

the shape of the hard-to-adhere adherend, to which the acrylic pressure-sensitive adhesive tape according to the present invention is used, is not particularly limited either. For example, the hard-to-adhere adherend may be an adherend in a shape having a flat or three-dimensional curved surface or a coated molding in a shape having a flat or three-dimensional curved surface.

The acrylic pressure-sensitive adhesive tape according to the present invention can be used, for example, for protection or decoration of coating of an automobile coated plate, as it is bonded thereto. The acrylic pressure-sensitive adhesive tape according to the present invention can be also used for connection and fixation of an article to the automotive coated plate via the adhesive tape. Examples of the articles include exterior parts, body-protecting parts, and decorative parts for automobiles.

The acrylic pressure-sensitive adhesive tape according to the present invention can be used preferably for adhesion of hard automotive exterior parts to which the force is directly applied via the tape when the tape is pressed against an automobile coated plate or the like such as moldings, emblems and others, and additionally for adhesion of generally soft automotive exterior parts, including soft rubber hollow parts such as weather strip.

### [Description of Embodiments]

Hereinafter, the present invention will be described with reference to Examples, but it should be understood that the present invention is not restricted by these Examples.

### (Preparation example of monomer sirup 1)

A photopolymerization initiator (trade name: "Irgacure 651", produced by Ciba Inc) (0.05 parts by weight) and a photopolymerization initiator (trade name: "Irgacure 184", produced by Ciba Inc) (0.05 parts by weight) were blended with a monomer mixture containing 2-ethylhexyl acrylate (92 parts by weight) and acrylic acid (8 parts by weight); and ultraviolet ray was irradiated to the mixture until the viscosity thereof (BH viscometer, No. 5 rotor, 10 rpm, measurement temperature: 30°C) reached 15 Pa·s, to give a partially polymerized composition (sirup) (hereinafter, referred to as "partially polymerized monomer sirup (A)").

### (Preparation example of release liner 1)

The following composition was extrusion-molded into a sheet shape by a three layer-coextrusion T die molding method to give a release sheet (thickness: 100 µm) having a release layer (thickness: 30 µm), an intermediate layer (thickness: 40 µm), and a rear-face layer (thickness: 30 µm) (referred to as "release liner (A)"),
Release layer: a high-density polyethylene resin (trade name "HI-ZEX 3300F", produced by Prime Polymer Co., Ltd., density: 950 kg/m³)/a low-density polyethylene resin (trade name "OM05B" produced by Tosoh Corporation, density: 924 kg/m³) at a high-density polyethylene resin/low"density polyethylene resin [blending ratio of 20/80 (by weight).
Intermediate layer: a high-density polyethylene resin (trade name "HI-ZEX 3300F", produced by Prime Polymer Co., Ltd., density: 950 kg/m³)
Rear-face layer: a low-density polyethylene resin (trade name "OM05B", produced by Toso Corporation, density: 924 kg/m³)

### (Preparation example of release liner 2)

A release sheet (referred to as "release liner (B)") was prepared in a manner similar to the preparation example of release liner 1, except that the blending rate of high-density polyethylene resin/low-density polyethylene resin was changed to 40/60 (by weight).

### (Preparation example of release liner 3)

A release sheet (referred to as "release liner (C)") was prepared in a manner similar to the preparation example of release liner 1, except that the blending rate of high-density polyethylene resin/low-density polyethylene resin was changed to 60/40 (by weight).

### (Preparation example of release liner 4)

A release sheet (referred to as "release liner (D)") was prepared in a manner similar to the preparation example of release liner 1, except that the blending rate of high-density polyethylene resin/low-density polyethylene resin was changed to 80/20 (by weight).

### (Example 1)

1,6-Hexanediol diacrylate (0.08 parts by weight) was added to the partially polymerized monomer sirup (A) (100 parts by weight); and hollow glass microspheres (trade name: "Cel-star Z-27", produced by Tokai Kogyo Co., Ltd.) were added thereto in an amount of 0.5 parts by weight with respect to 100 parts by weight of the partially polymerized monomer sirup (A).
A fluorochemical surfactant (trade name: "Surflon S-393", produced by Seimi Chemical Co., Ltd., an acrylic polymer having polyoxyethylene groups and fluorinated hydrocarbon groups on the side chains, Mw: 8300) was added in an amount of 0.5 parts by weight to the partially polymerized monomer sirup after addition of the hollow glass microspheres, to give a microsphere-containing viscoelastic composition. The content of the hollow glass microspheres in the entire volume of the microsphere-containing viscoelastic composition was about 1.5 vol %.
In an apparatus including a disk having a through-hole in its center, a stator having many small gears formed thereon, and a rotor having small gears similar to those of the stator, which rotor faces the stator on the disk , the microsphere-containing viscoelastic composition was fed into the space between the gears of the stator and those of rotor and nitrogen gas was incorporated into the microsphere-containing viscoelastic composition through the through-hole, as the rotor was rotated at high speed for mixing the bubbles in the microsphere-containing viscoelastic composition, to give a bubble-mixed microsphere-containing viscoelastic composition. The bubbles were mixed in an amount of about 15 vol % with respect to the total volume of the microsphere-containing viscoelastic composition.
The bubble-mixed microsphere-containing viscoelastic composition was coated on the release-treated face of a process separator (release liner for preparation of sheet; a polyethylene terephthalate base release-treated on one face, trade name: "MRF" or "MRN", produced by Mitsubishi Polyester Film Co., Ltd.); and the bubble-mixed microsphere-containing viscoelastic composition formed was photocured by irradiation of ultraviolet ray from a black light lamp (produced by Toshiba Corporation) for 3 minutes at an illuminance (as determined by using a UV Checker "UVR-T1", produced by Topcon Corporation. having a maximum sensitivity of approximately 350 nm) of 5 mW to give a bubble-mixed microsphere-containing pressure-sensitive adhesive layer (thickness: 800 µm) formed on the release-treated face of the process separator.
The bubble-mixed microsphere-containing pressure-sensitive adhesive layer formed on the release-treated face of the process separator was laminated to the release layer of the release liner (A) to give a pressure-sensitive adhesive sheet.

### (Example 2)

A pressure-sensitive adhesive sheet was prepared in a manner similar to Example 1, except that the release liner (A) used as the release liner was replaced with release liner (B).

### (Example 3)

A pressure-sensitive adhesive sheet was prepared in a manner similar to Example 1, except that the release liner (A) used as the release liner was replaced with release liner (C).

### (Example 4)

A pressure-sensitive adhesive sheet was prepared in a manner similar to Example 1, except that the release liner (A) used as the release liner was replaced with release liner (D).

### (Comparative Example 1)

A pressure-sensitive adhesive sheet was prepared in a manner similar to Example 1, except that the release liner (A) used as the release liner was replaced with a single-layered extrusion-molded film (produced by Aichi Plastics Industry Co., Ltd., thickness: 100 µm) having a low-density polyethylene resin (trade name: "NUC8160", produced by Nippon Unicar Company Limited) as its raw material.

### (Evaluation)

The "suppression of the liner pop-off", "low temperature initial adhesiveness", "liner releasability", and "heat resistance "of each of the pressure-sensitive adhesive sheets prepared in Examples and Comparative Example were evaluated respectively in the following "liner pop-off test", "90° peel test under 0°C condition", "liner releasability test", and "heat-resistance test". The results are summarized in Table 1.

### (90° Peel test under 0°C condition)

The bubble-mixed microsphere-containing pressure-sensitive adhesive layer exposed after separation of the process separator was laminated with a PET film having a thickness of 50 µm, to give a base-bound single-faced pressure-sensitive adhesive sheet with a bubble-mixed microsphere-containing pressure-sensitive adhesive layer protected with the release liner.
The base-bound single-faced pressure-sensitive adhesive sheet was left under an atmosphere at 0°C for 30 minutes; the release liner was separated for exposure of the bubble-mixed microsphere-containing pressure-sensitive adhesive layer; and the sheet was bonded by one-way pressurization under a 2 kg roller to an adherend, acid rain-resistant paint plate (trade name "KINO-1200TW," produced by Kansai Paint Co., Ltd.) and the composite was aged at 0°C for 20 minutes.
After aging, the base-bound single-faced pressure-sensitive adhesive sheet was peeled off to a peeling angle of 90° at a tensil speed of 300 mm/minute in a tensile test machine (trade name: "TCM-1KNB", produced by Minebea Co., Ltd.) under an atmosphere of 0°C, for determination of the 90° peeling strength under the 0°C condition.

### (Liner pop-off test)

Each of the pressure-sensitive adhesive sheets was cut to a dimension of 7 mm width ×100 mm (in machine direction), to give a strip-shaped sample.
The process separator was removed from the strip-shaped sample for exposure of the bubble-mixed microsphere-containing pressure-sensitive adhesive layer, adhered to a polyvinyl chloride sheet coated with a urethane-based undercoat agent (45 mm width ×150 mm lengths×1 mm thickness, produced by RIKEN TECHNOS CORP.), and bonded by single reciprocated pressurization under a 5-kg roller (roller width: 65 mm). The resulting sheet was used as a test piece.
After stored for 24 hours, the test piece was fixed on a box-shaped fixing rod having length 100 mm× width 50 mm× height 30 mm with the release liner facing inward as shown in Figure 1, as it is bent elliptically. After 72 hours of storage, the length of the region wherein the liner was lifted (separated) was determined, and the lengths of the partially separated regions in a test piece were summarized. The test was performed under an atmosphere at 23°C and 60 % RH.
When the total length of the lifted regions is 10 mm or less, the suppression of the liner pop-off was considered to be favorable (O), while when it is more than 10 mm, the suppression of the liner pop-off was considered to be unfavorable (×).

### (Liner releasability test)

Each of the pressure-sensitive adhesive sheets was cut to a width of 7 mm, to give a strip-shaped test piece. The length direction is the machine direction (MD).
The process separator was removed from the strip-shaped sample for exposure of the bubble-mixed microsphere-containing pressure-sensitive adhesive layer, which was laminated to a polyester film having a thickness of 50 µm (trade name "Lumirror S-10", produced by Toray Industries Inc.), and a polyester film was laminated and fixed to a plate-shaped material (SUS304BA board, 50 mm×150 mm) supporting rigidity with a double-sided tape.
The resistance to peeling of the release liner when the release liner was pulled to an angle of 180° was determined by using a universal tensile test machine ("trade name": TG-1kNB", produced by Minebea Co., Ltd) and used as the 180° peeling strength (N/7 mm). The test was conducted according to JIS Z0237 at a peeling rate (cloth head speed) of 300 mm/minute under an atmosphere of 23°C and 60 %. The number of the tests conducted was three (average).

### (Heat resistance test)

Each of the pressure-sensitive adhesive sheets was cut to a dimension of 7 mm width ×100 mm (in machine direction), to give a strip-shaped sample.
The process separator was removed from the strip-shaped sample for exposure of the bubble-mixed microsphere-containing pressure-sensitive adhesive layer, which was adhered to a polyvinyl chloride sheet coated with a urethane-based undercoat agent (45 mm width ×150 mm length×1 mm thickness, produced by Riken Technos Corp.) and bonded by single reciprocated pressurization under a 5-kg roller (roller width: 65 mm). The resulting sheet was used as a test piece.
After storage for 24 hours, the face of the polyvinyl chloride sheet opposite to the test piece was bonded to a stainless steel (SUS) plate having a size identical with that of the test piece of the polyvinyl chloride sheet by using a double-sided tape (trade name "No.500", produced by Nitto Denko Corp.) for prevention of deformation of the polyvinyl chloride sheet during heat test, and the resulting composite was heat-treated in an oven at 120°C for 3 minutes. After the heat treatment, the test piece was withdrawn into an ambient environment for immediate observation of the sample, and the heat resistance was evaluated according to the following evaluation criteria: Favorable heat resistance (○): there is no partial lifting or peeling of the release liner
Unfavorable heat resistance (×): there is partial lifting or peeling of the release liner.

[Table 1]

**Table 1**

| | 2-EHA/AA (weight ratio) | Addition amount of hollow glass microspheres [parts by weight] | 90°peeling strength under 0°C condition [N/10mm] | Liner peeling strength [N/7mm] | Suppression of the liner pop-off | Heat resistance |
|---|---|---|---|---|---|---|
| Example 1 | 92/8 | 0.5 | 8.7 | 1.45 | ○ | ○ |
| Example 2 | 92/8 | 0.5 | 8.7 | 2.28 | ○ | ○ |
| Example 3 | 92/8 | 0.5 | 8.7 | 3.81 | ○ | ○ |
| Example 4 | 92/8 | 0.5 | 8.7 | 4.99 | ○ | ○ |
| Comparative Example 1 | 92/8 | 0.5 | 8.7 | 0.85 | × | × |

In Table 1, "2-EHA" means "2-ethylhexyl acrylate", and "AA" means "acrylic acid".

It was found that the samples in Examples had larger initial adhesiveness at low temperature, indicating that they were bonded favorably. It was also found that the release liners were favorable in suppression of the liner pop-off and also in heat resistance. The sample in the Comparative Example was unfavorable in suppression of the liner pop-off and heat resistance of the release liner, indicating that it was not a favorable acrylic pressure-sensitive adhesive sheet.

### [Industrial Applicability]

The acrylic pressure-sensitive adhesive tape or sheet according to the present invention can be preferably used for fixation of an automotive external part, in particular a weather strip, to an automotive coated plate.

### [Reference Signs List]

- 1: Box-shaped fixing rod
- 2: Test piece

## Claims

1. An acrylic pressure-sensitive adhesive tape or sheet having a pressure-sensitive adhesive layer and a release liner, **characterized in that**: the pressure-sensitive adhesive layer is a bubble-mixed inorganic filler-containing acrylic pressure-sensitive adhesive layer containing an acrylic polymer formed from an acrylic monomer mixture containing an alkyl (meth)acrylate ester (a) having an alkyl group having a carbon number of 1 to 14 and a polar group-containing vinyl monomer (b) at a component rate [(a)/(b)] (by weight) of 95/5 to 91/9, an inorganic filler in an amount at a rate of 0.1 parts by weight or more and less than 2 parts by weight with respect to 100 parts by weight all monomer component forming the acrylic polymer, and bubbles; and
the release liner is a release liner having an at least 3-layered structure having a low-density polyethylene layer as one surface layer, a mixed resin layer containing a low-density polyethylene and a high-density polyethylene as resin components as the other surface layer, and additionally a high-density polyethylene layer as an intermediate layer.

2. The acrylic pressure-sensitive adhesive tape or sheet according to Claim 1, wherein the inorganic filler is at least one inorganic filler selected from the group of hydrophobic silica and hollow glass microspheres.

3. The acrylic pressure-sensitive adhesive tape or sheet according to Claim 1 or 2, wherein at least one polar group-containing vinyl monomer (b) is acrylic acid.

4. The acrylic pressure-sensitive adhesive tape or sheet according to any one of Claims 1 to 4, wherein the mixed resin layer containing a low-density polyethylene and a high-density polyethylene as resin components in the release liner contains the low-density polyethylene and the high-density polyethylene at a low-density polyethylene/high-density polyethylene weight ratio of 90/10 to 10/90.

5. The acrylic pressure-sensitive adhesive tape or sheet according to any one of Claims 1 to 4, wherein the thickness of the release liner is 10 to 500 µm.

6. The acrylic pressure-sensitive adhesive tape or sheet according to any one of Claims 1 to 5, for use in fixation of an automotive exterior part to an automotive coated plate.

7. The acrylic pressure-sensitive adhesive tape or sheet according to Claim 6, wherein the automotive exterior part is a weather strip.
